# EUROPÄISCHE PATENTANMELDUNG

(11) **EP 1 609 833 A1**
(43) Veröffentlichungstag der Anmeldung: **28.12.2005**
(21) Anmeldenummer: 05013008.7
(22) Anmeldetag: 16.06.2005
(51) Int. Cl.: C09J 123/14, C08K 5/10, C09J 11/08

(54) **Schmelzklebemassen**

(30) Priorität: 25.06.2004 DE 102004030714
(71) Anmelder: Clariant GmbH, 65929 Frankfurt am Main (DE)
(72) Erfinder: Hohner, Gerd, Dr., 86368 Gersthofen (DE); Bach, Sebastijan, 86462 Langweid (DE)
(74) Vertreter: Paczkowski, Marcus

(57) **Zusammenfassung**

Gegenstand der Erfindung sind Schmelzklebemassen enthaltend
a) 5 bis 99,995 Gew.-% eines Polyolefins aus einem oder mehreren C₃-C₁₈-α-Olefin(en) sowie gegebenenfalls Ethylen,
b) 0,005 bis 2 Gew.-% eines oder mehrerer Nukleierungsmittel(s),
c) 0 bis 50 Gew.-% Klebharz und
d) 0 bis 30 Gew.-% Wachs.

## Beschreibung

Gegenstand der Erfindung sind Schmelzklebemassen, die Polyolefine sowie Nukleierungsmittel enthalten. Weiterer Erfindungsgegenstand ist ein Verfahren zur gezielten Einstellung der offenen Zeit von Schmelzklebemassen.

Schmelzkleber sind lösemittelfreie Klebstoffe, die auf die zu verklebenden Substrate in heißem, schmelzflüssigem Zustand aufgetragen werden und die nach dem Erstarren ihre Klebewirkung entfalten. Sie werden aufgrund ihrer vielseitigen Vorteile in zunehmendem Umfang u.a. in der Verpackungs-, Möbel-, Textil- und Schuhindustrie als wirtschaftliche und umweltfreundliche Alternative zu herkömmlichen, lösemittelbasierenden Klebstoffen eingesetzt. Wichtige Bestandteile üblicher Schmelzkleber-Rezepturen sind polare oder unpolare Polymere, z.B. Polymere aus Olefinkohlenwasserstoffen oder Ethylen-Vinylacetat-Copolymere, Harze sowie Wachse.

Unpolare polymere Olefinkohlenwasserstoffe zeigen gegenüber Ethylen-Vinylacetat-Copolymeren in Schmelzkleberkompositionen diverse Vorteile. Zu nennen sind hier z.B. verbesserte Thermostabilitäten, günstigere Verarbeitungseigenschaften in Bezug auf Fadenbildung oder Vercrackung sowie bessere Klebeeigenschaften.

Die Verwendung von Olefincopolymeren aus Propylen und Ethylen oder höheren 1-Olefinen in Schmelzkleberrezepturen wird beispielsweise in EP-A-1 263 909 beschrieben. die EP-A-0 886 656 beschreibt Schmelzkleber, die Copolymere aus Ethylen und Buten oder höheren 1-Olefinen enthalten. In der US-A-5,548,014 wird der Einsatz von Olefincopolymeren in Schmelzklebern beansprucht.

Schmelzkleber, die derartige Olefincopolymere enthalten, weisen in der Regel vergleichsweise lange offene Zeiten auf. Die offene Zeit ist dabei als die Zeitspanne definiert, innerhalb der ― gerechnet vom Zeitpunkt des Auftrags der Schmelzklebermasse auf das zu verklebende Substrat ― eine Verklebung möglich ist. Schnell laufende Verarbeitungsmaschinen erfordern kurze offene Zeiten, die im Falle von Olefincopolymeren enthaltenden Rezepturen häufig nicht gegeben sind. Zwar kann die offene Zeit durch Zusatz von Polyethylenwachsen oder Paraffinen abgekürzt werden, doch ist dies mit einer unerwünschten Verminderung der Klebkraft des Schmelzklebers verbunden. Es besteht daher Bedarf nach Polyolefinbasierenden Schmelzklebern mit kurzer offener Zeit bzw. nach einer Möglichkeit, die offene Zeit mit geringen Aufwand flexibel steuern und den jeweiligen Verarbeitungsbedingungen anpassen zu können, ohne gleichzeitig Nachteile bezüglich des Wirkungsprofils in Kauf nehmen zu müssen.

Es wurde nun gefunden, dass sich in diesem Sinne die offene Zeit durch Zusatz geringer Mengen eines Nukleierungsmittels gezielt beeinflussen lässt.

Gegenstand der vorliegenden Erfindung sind daher Schmelzklebemassen, enthaltend
a) 5 bis 99,995 Gew.-% eines Polyolefins aus einem oder mehreren C₃-C₁₈-α-Olefin(en) sowie gegebenenfalls Ethylen,
b) 0,005-2 Gew.-% eines oder mehrerer Nukleierungsmittel(s),
c) 0 bis 50 Gew.-% Klebharz und
d) 0 bis 30 Gew.-% Wachs.

Bevorzugt enthalten diese Schmelzklebemassen
a) 5 bis 94,995 Gew.-% eines Polyolefins aus einem oder mehreren C₃-C₁₈-*α*-Olefin(en) sowie gegebenenfalls Ethylen,
b) 0,005 bis 2 Gew.-% eines oder mehrerer Nukleierungsmittel(s),
c) 5 bis 50 Gew.-% Klebharz und
d) 0 bis 20 Gew.-% Wachs.

Bevorzugt weist das Polyolefin einen Erweichungspunkt Ring/Kugel zwischen 40 und 160°C, bevorzugt zwischen 80 und 140°C und eine Schmelzviskosität, gemessen bei 170°C, zwischen 40 und 100.000 mPa.s, bevorzugt zwischen 60 und 50.000 mPa.s, auf.

Bevorzugt besteht das Polyolefin aus Propylen- und Ethyleneinheiten.

Bevorzugt werden als Nukleierungsmittel Verbindungen aus der Klasse der Alkali-, Erdalkali- oder Aluminiumsalze von Carbonsäuren oder der Klasse der Bis-Benzylidensorbitane eingesetzt.

Besonders bevorzugt werden als Nukleierungsmittel Bis-Benzylidensorbitane eingesetzt.

Weiterer Erfindungsgegenstand ist schließlich ein Verfahren zur gezielten Verkürzung der offenen Zeit der erfindungsgemäßen Schmelzklebemassen, dadurch gekennzeichnet, dass die Verkürzung der offenen Zeit durch Art und Konzentration des Nukleierungsmittels gesteuert wird.

Als Polyolefine kommen sowohl Copolymere des Ethylens mit α-Olefinen der Kettenlängen C₃-C₁₈ oder Homopolymere dieser α-Olefine oder deren Copolymere untereinander infrage. Die Polyolefine können nach üblichen Verfahren, z.B. durch katalytische Polymerisation der Olefine hergestellt werden. Als Katalysatoren kommen beispielsweise Ziegler-Natta- oder auch Metallocenkatalysatoren in Betracht. Die Herstellung derartiger Produkte ist etwa in Ullmann's Encyclopedia of Industrial Chemistry, 5. Aufl., Vol. A 21, S. 500-504, 509-514, 518-530 (Weinheim 1992) beschrieben. Mit Metallocenkatalysatoren hergestellte niedrigmolekulare Polyolefine sind beispielsweise in EP-A-0 384 264 beschrieben. Die Polyolefine weisen einen Erweichungspunkt Ring/Kugel zwischen 40 und 160°C, bevorzugt 80 bis 140°C und eine Schmelzviskosität, gemessen bei 170°C, zwischen 40 und 100000 mPa.s, bevorzugt 60 bis 50000 mPa.s auf.

Hierbei werden die Schmelzviskositäten nach DIN 53019 mit einem Rotationsviskosimeter und die Erweichungspunkte Ring/Kugel nach DIN EN 1427 bestimmt.

Als Nukleierungsmittel können übliche Keimbildner eingesetzt werden. Geeignet sind beispielsweise Salze von organischen Säuren, etwa aliphatischen Mono- oder Dicarbonsäuren, z.B. Alkali-, Erdalkali- oder Aluminiumsalze der Bernsteinsäure, Glutarsäure, Capronsäure, Montansäure oder entsprechende Salze von aromatischen Gruppen enthaltenden Carbonsäuren wie Benzoe-, Alkylbenzoe-, Naphtoe-, Phenylessig- oder Zimtsäure. Weiterhin kommen Phosphorsäurebasierende Zusätze in Frage, beispielsweise Alkali-Organophosphate. Wirksam sind auch lonomere, beispielsweise entsprechende Handelsprodukte wie die Typen der Aclyn®-Reihe (Handelsprodukte der Fa. Honeywell) oder der Surlyn®-Reihe (Handelsprodukte der Fa. Dupont). Geeignet sind ebenfalls Nukleierungsmittel vom Typ des Dibenzylidensorbitols, sowohl in der unsubstituierten als auch in der einfach oder mehrfach alkyl-, beispielsweise methylsubstituierten Form. Bevorzugte Nukleierungsmittel sind Dibenzylidensorbitole. Die Einsatzmengen liegen, bezogen auf das eingesetzte Polyolefin, zwischen 0,005 bis 2,0, bevorzugt zwischen 0,1 und 0,6 Gew.-%.

Als Klebharze eignen sich beispielsweise synthetische oder modifizierte Terpenharze, vollständig oder partiell hydrierte Kolophoniumharze, aliphatische Kohlenwasserstoffharze sowie hydrierte und/oder anderweitig modifizierte aliphatische, aliphatisch-aromatische oder aromatische Kohlenwasserstoffharze. Die erfindungsgemäße Schmelzklebermischung enthält Harze in Anteilen zwischen 0 und 50 Gew.-%, bevorzugt zwischen 0 und 30 Gew.-%.

Als Wachse können sowohl natürliche, gegebenenfalls raffinierte Produkte, z.B. mikro- oder makrokristalline Paraffine oder Tafelparaffine wie auch synthetische Wachse wie Polyethylen-, Polypropylen- oder Fischer-Tropsch-Wachse eingesetzt werden. Wachse können in der Schmelzklebermischung in Anteilen zwischen 0 und 30, bevorzugt 0 und 10 Gew.-% enthalten sein.

Weitere mögliche Bestandteile der Schmelzklebermischung sind unpolare oder polare Polymere wie z.B. Ethylen-Vinylacetat-Copolymere, ataktische Poly-alpha-Olefine (APAO), Polyisobutylen, Styrol-Butadien-Styrol-Blockpolymere oder Styrol-Isopren-Styrol-Blockpolymere, für besonders hoch beanspruchte Verklebungen auch Polyamide oder Polyester. Die Schmelzklebemassen können zusätzlich Füllstoffe oder Hilfsstoffe wie Weichmacher, z.B. Kohlenwasserstofföle, Pigmente und Antioxidantien enthalten.

### Beispiele:

Die "offene Zeit" verschiedener für die Schmelzkleberherstellung geeigneter Polyolefine wurde ohne bzw. mit Zusatz von Nukleierungsmittel verglichen.

### Versuchsdurchführung:

Das Prüfprodukt wird als Schmelze bei 180°C auf einen handelsüblichen Karton der Abmaße 15x35 cm mit Hilfe eines Rahmenrakels der Filmstärke 500 µm appliziert. Zu Beginn des Abziehens wird eine Stoppuhr gestartet und in geeigneten zeitlichen Abständen (üblicherweise 5s) ein handelsübliches Standardpapier der Maße 2x8cm verklebt, bis keinerlei Adhäsionsneigung des applizierten Klebstoffes mehr erkennbar ist. Gegebenenfalls müssen die Zeitintervalle angepasst werden.

Als offene Zeit gilt die Zeitspanne, nach der 100% Faserausriß des Substrates beobachtet wird.

Als Nukleierungsmittel wurden Dibenzylidensorbitol (Ciba® Irgaclear® D) bzw. Dimethyldibenzylidensorbitol (Ciba® Irgaclear® DM) (Handelsprodukte der Fa. Ciba Specialty Chemicals) verwendet.

Als Polyolefine wurden eingesetzt:
Beispiele 1 und 2:
   ®TP Licocene PP 1602: Handelsprodukt der Fa. Clariant GmbH, niedrigmolekulares Polypropylen, hergestellt mit Hilfe von Metallocenkatalysator, Schmelzviskosität ca. 7000 mPa.s/170°C, MFR_{230/2,16} 3500 g/10 min (gemessen nach ASTM D1238-01), Erweichungspunkt Ring/Kugel ca. 85°C;
Beispiel 3:
   Niedrigmolekulares Propylenpolymer, hergestellt mit Hilfe von Metallocenkatalysator, Schmelzviskosität ca. 7000 mPa.s/170°C, MFR_{230/2,16} 3700 g/10 min (gemessen nach ASTM D1238-01), Erweichungspunkt Ring/Kugel ca. 100°C;
Beispiel 4:
   ®Vestoplast 703: amorphes Poly-α-Olefin, Handelsprodukt der Fa. Degussa AG, Schmelzviskosität bei 170°C ca. 4000 mPa.s, Erweichungspunkt Ring/Kugel 125°C.

### Ergebnisse:

| Beispiel | Nukleierungsmittel | | offene Zeit |
|---|---|---|---|
| | Typ | Menge | Sekunden |
| | | (Gew.-%) | |
| 1 | ®Irgaclear D | 0 | 90 |
| | | 0,03 | 30 |
| | | 0,06 | 10 |
| | | 0,09 | <5 |
| 2 | ®Irgaclear DM | 0 | 90 |
| | | 0,03 | 25 |
| | | 0,06 | 5 |
| | | 0,09 | <5 |
| 3 | ®Irgaclear D | 0 | 25 |
| | | 0,03 | 10 |
| | | 0,06 | 5 |
| | | 0,09 | <5 |
| 4 | ®Irgaclear D | 0 | 30 |
| | | 0,03 | 30 |
| | | 0,09 | 15 |
| | | 0,15 | 15 |

Die Beispiele zeigen, dass durch den erfindungsgemäßen Zusatz von Nukleierungsmittel eine Reduzierung der offenen Zeit innerhalb eines weiten Rahmens erreicht werden kann. Eine gezielte Einstellung entsprechend der jeweiligen anwendungstechnischen Anforderung ist möglich.

## Patentansprüche

1. Schmelzklebemassen, enthaltend
a) 5 bis 99,995 Gew.-% eines Polyolefins aus einem oder mehreren C₃-C₁₈-α-Olefin(en) sowie gegebenenfalls Ethylen,
b) 0,005 bis 2 Gew.-% eines oder mehrerer Nukleierungsmittel(s),
c) 0 bis 50 Gew.-% Klebharz und
d) 0 bis 30 Gew.-% Wachs.

2. Schmelzklebemassen nach Anspruch 1, enthaltend
a) 5 bis 94,995 Gew.-% eines Polyolefins aus einem oder mehreren C₃-C₁₈-α-Olefin(en) sowie gegebenenfalls Ethylen,
b) 0,005 bis 2 Gew.-% eines oder mehrerer Nukleierungsmittel(s),
c) 5 bis 50 Gew.-% Klebharz und
d) 0 bis 20 Gew.-% Wachs.

3. Schmelzklebemassen nach Anspruch 1 oder 2, **dadurch gekennzeichnet, dass** das Polyolefin einen Erweichungspunkt Ring/Kugel zwischen 40 und 160°C, bevorzugt zwischen 80 und 140°C und eine Schmelzviskosität, gemessen bei 170°C, zwischen 40 und 100.000 mPa.s, bevorzugt zwischen 60 und 50.000 mPa.s, aufweist.

4. Schmelzklebemassen nach einem oder mehreren der Ansprüche 1 bis 3, **dadurch gekennzeichnet, dass** das Polyolefin aus Propylen- und Ethyleneinheiten besteht.

5. Schmelzklebemassen nach einem oder mehreren der Ansprüche 1 bis 4, **dadurch gekennzeichnet, dass** als Nukleierungsmittel Verbindungen aus der Klasse der Alkali-, Erdalkali- oder Aluminiumsalze von Carbonsäuren oder der Klasse der Bis-Benzylidensorbitane eingesetzt werden.

6. Schmelzklebemassen nach einem oder mehreren der Ansprüche 1 bis 5, **dadurch gekennzeichnet, dass** als Nukleierungsmittel Bis-Benzylidensorbitane eingesetzt werden.

7. Verfahren zur gezielten Verkürzung der offenen Zeit von Schmelzklebemassen gemäß den Ansprüchen 1 bis 6, **dadurch gekennzeichnet, dass** die Verkürzung der offenen Zeit durch Art und Konzentration des Nukleierungsmittels gesteuert wird.
